# EUROPEAN PATENT SPECIFICATION

(11) **EP 1 365 135 B1**
(45) Date of publication and mention of the grant of the patent: **11.02.2009**
(21) Application number: 03011424.3
(22) Date of filing: 20.05.2003
(51) Int. Cl.: F02D 41/38, F02D 41/40

(54) **A fuel injection control device**
Kraftstoffeinspritzsteuersystem
Système de commande d'injection de carburant

(30) Priority: 21.05.2002 JP 2002146408
(43) Date of publication of application: 26.11.2003
(73) Proprietor: Toyota Jidosha Kabushiki Kaisha, Toyota-shi, Aichi-ken, 471-8571 (JP)
(72) Inventor: Omae, Kazuhiro, Toyota-shi, Aichi-ken 471-8571 (JP); Watanabe, Yoshimasa, Toyota-shi, Aichi-ken 471-8571 (JP); Tsutsui, Tsuneo, Toyota-shi, Aichi-ken 471-8571 (JP)
(74) Representative: TBK-Patent

(56) References cited:
- WO-A-02/06655
- WO-A-03/054370
- WO-A-20/05021953
- DE-A1- 19 937 148
- US-B1- 6 311 669

## Description

### BACKGROUND OF THE INVENTION

### 1. Field of the Invention

The present invention relates to a fuel injection control device according to the preamble of claim 1 of the invention for an internal combustion engine.

### 2. Description of the Related Art

In a known fuel injection control device, a pressurized fuel chamber common to a plurality of cylinders is provided and a fuel injector arranged on each cylinder injects fuel, pressurized in the chamber, to supply fuel, for example, into a cylinder, at a high pressure, in compression stroke or the like.

In the fuel injector, a fuel injection starts when the valve body opens the injection hole, and the fuel injection is stopped when the valve body shuts the injection hole. Thus, when the fuel injection is carried out, the fuel pressure in the fuel injector decreases and the pressure decrease propagates toward the pressurized fuel chamber as a negative pressure wave. When the negative pressure wave reaches the pressurized fuel chamber, the chamber, as an open end, reflects the negative pressure wave as a positive pressure wave and it propagates toward the fuel injector. When the positive pressure wave reaches the fuel injector, the fuel injector, as a close end, reflects the positive pressure as it is and it propagates toward the pressurized fuel chamber. Next, when the positive pressure wave reaches the pressurized fuel chamber, the chamber, as an open end, reflects the positive pressure wave as a negative pressure wave and it propagates toward the fuel injector. When the negative pressure wave reaches the fuel injector, the fuel injector, as a close end, reflects the negative pressure wave as it is and it propagates toward the pressurized fuel chamber. Such reflections of the pressure wave are repeated until the pressure wave disappears due to damping.

WO 03/054370A discloses a generic fuel injection control device comprising a pressurized fuel chamber and a fuel injector connected with the pressurized fuel chamber via a pipe, which carries out a fuel injection, wherein an oscillating pressure phenomenon is caused by the fuel injection control.

In JP-2000-18064 A, the pressure propagation speed is calculated on the basis of the interval at which such a pressure wave reaches the pressurized fuel chamber. Next, the bulk modulus of the current fuel is precisely calculated on the basis of the calculated pressure propagation speed and thus the amount of fuel that must be supplied from the high-pressure pump to the pressurized fuel chamber is controlled by using of the calculated bulk modulus so as to maintain a desired pressure in the pressurized fuel chamber.

In a diesel engine or the like, a pilot fuel injection may be carried out before the main fuel injection. In the pilot fuel injection, the fuel injection rate is preferably made high. Thus, the injected fuel is dispersed widely in the whole of the combustion chamber, and is burned with fuel injected by the main fuel injection. On the other hand, in the main fuel injection, the fuel injection rate is preferably made low. Thus, the injected fuel does not burn simultaneously with the start of the main fuel injection and a large noise is not produced. However, as the above related art, if the desired pressure in the pressurized fuel chamber is merely maintained, the desired fuel injection rates in the pilot fuel injection and the main fuel injection cannot be realized.

### SUMMARY OF THE INVENTION

Therefore, an object of the present invention is to provide a fuel injection control device comprising a pressurized fuel chamber and a fuel injector connected with the pressurized fuel chamber via a pipe in which, when the fuel injector carries out a pilot fuel injection in addition to the main fuel injection, at least one of the high fuel injection rate in the pilot fuel injection and the low fuel injection rate in the main fuel injection can be realized without changing the opening speed of the valve body in the fuel injector or the like.

This object is achieved by a fuel injection control device having the features of claim 1.

Advantageous further developments are defined in the dependent claims.

According to the present invention, there is provided a fuel injection control device comprising a pressurized fuel chamber and a fuel injector connected with said pressurized fuel chamber via a pipe wherein, when the fuel injector carries out a pilot fuel injection and a main fuel injection, a part of the fuel in the fuel injector is consumed without the fuel injection to produce a negative pressure wave in the fuel injector such that a positive pressure wave reaches the fuel injector in the pilot fuel injection or a negative pressure wave reaches the fuel injector in the main fuel injection.

### BRIEF DESCRIPTION OF THE DRAWINGS

In the drawings:
Fig. 1 is a schematic view of a fuel injection control device according to the present invention;
Fig. 2 is a time-chart showing changes of opening or closing of the control valve body and of the fuel pressure in the tip space of the fuel injector;
Fig. 3 is a schematic view of another fuel injection control device according to the present invention; and
Fig. 4 is a schematic view of a further fuel injection control device according to the present invention.

### DESCRIPTION OF THE PREFERRED EMBODIMENT

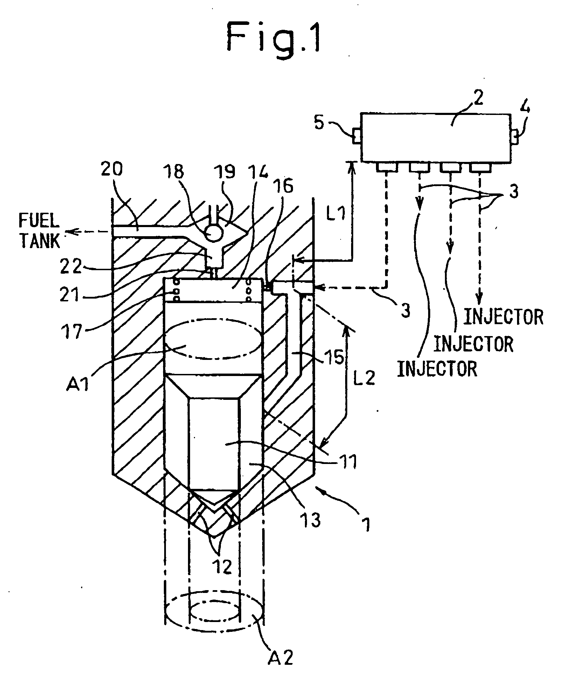

Fig. 1 is a schematic view of a fuel injection control device according to the present invention. Reference numeral 1 designates a fuel injector arranged on each cylinder, and reference numeral 2 designates a pressurized fuel chamber. Each fuel injector 1 and the pressurized fuel chamber 2 are connected via each pipe 3. Each fuel injector 1 injects high-pressure fuel pressurized in the chamber 2 common to each cylinder, for example, to supply fuel directly into the cylinder of a diesel engine or a direct fuel injection type spark ignition engine. Of course, the fuel injector 1 can be used to inject fuel into, for example an intake port and not into a cylinder.

A high-pressure pump (not shown) is connected to the pressurized fuel chamber 2 to maintain the desired high fuel pressure in the pressurized fuel chamber 2. The high-pressure pump is usually driven by the engine and, for example, pumps an amount of fuel consumed in fuel injections by two fuel injectors into the pressurized fuel chamber 2 at the end of the fuel injections. A pressure sensor 4 is arranged to detect a fuel pressure in the pressurized fuel chamber 2. Reference numeral 5 is a temperature sensor to detect a fuel temperature in the pressurized fuel chamber 2.

Each fuel injector 1 comprises a valve body 11 for an injection hole, for example, which can slide in the axial direction, and the tip portion of the valve body 11 can open and shut the injection hole 12. The fuel pressure in the tip space 13 communicating with the injection hole 12 acts on the tip side of the valve body 11 and the fuel pressure in the base space 14 acts on the base side of the valve body 11. A high fuel pressure passage 15 is formed in the fuel injector 1. The high fuel pressure passage 15 communicates with the base space 14 via an orifice 16 and directly with the tip space 13. The pipe 3 communicating with the pressurized fuel chamber 2 is connected to the high fuel pressure passage 15 at the vicinity of the base space 14.

In the base space 14, a closing spring 17 is arranged to bias the valve body 11 in the closing direction. A control valve body chamber 19 in which a control valve body 18 is positioned is provided in the vicinity of the base space 14, and communicates with a fuel tank via a low fuel pressure passage 20. The control valve body chamber 19 is communicated with the base space 14 via a communicating passage 22 having an orifice 21. The control valve body 18 is controlled to open or shut the communicating passage 22 by an actuator (not shown).

When the control valve body 18 shuts the communicating passage 22, the fuel pressure in the base space 14 becomes the same high-fuel pressure as that in the high fuel passage 15 by the high pressure fuel supplied via the orifice 16 from the high fuel pressure passage 15. At this time, the area receiving the pressure in the opening direction (the area facing to the base space 14) and the area receiving the pressure in the closing direction (the area facing to the tip space 13) are (A1) shown by a chain line as a perspective view, and are equal each other. On the other hand, the fuel pressure in the tip space 13 is the same high fuel pressure as that in the high fuel pressure passage 15 and thus the pressing force acting on the valve body 11 for the injection hole in the closing direction by the fuel pressure in the base space 14 and the pressing force acting on the valve body 11 in the opening direction by the fuel pressure in the tip space 13 are equal and offset each other. Therefore, the valve body 11 is closed by the pressing force of the closing spring 17 in the closing direction.

Thus, when the valve body 11 for the injection hole is closed, the fuel pressure in the tip space 13 does not act on the tip side from the seat portion in the valve body 11. Therefore, the area receiving the fuel pressure in the tip portion of the valve body 11, i.e., the area receiving the fuel pressure in the opening direction decreases from (A1 ) to a doughnut-like shape (A2) shown by a chain line as a perspective view. On the other hand, the area receiving the fuel pressure in the base portion of the valve body 11 in the opening direction is still (Al). Therefore, although the fuel pressures (P) in the tip space 13 and in the base space 14 are equal, the pressing force in the closing direction acting on the valve body 11 is larger by (P1=(A1-A2)P) than the pressing force in the opening direction acting on the valve body 11. In addition, the pressing force (P2) of the closing spring 17 in the closing direction also acts on the valve body 11 and thus the valve body 11 is certainly closed.

When the control valve body 18 opens the communicating passage 22, a part of the high pressure fuel in the base space 14 flows out to the control valve body chamber 19 via the communicating passage 22 having the orifice 21, is consumed therefrom, and is returned via the control valve body chamber 19 to the fuel tank via the low fuel pressure passage 20. Thus, the fuel pressure in the base space 14 drops. When the fuel pressure in the base space 14 becomes (P'=(A2P-P2)/A1), the pressing force (PC=A1P'+p2) acting on the valve body 11 in the closing direction is equal to the pressing force (PO=A2P) in the opening direction. Thereafter, if the fuel pressure in the base space 14 drops slightly, the pressing force in the opening direction is larger than the pressing force in the closing direction. Thus, the valve body 11 for the injection hole is opened and the high-pressure fuel in the tip space 13 is injected via the injection hole 12.

When the valve body 11 is opened, the area receiving the fuel pressure in the opening direction and the area receiving the fuel pressure in the closing direction become equal. Then, when the control valve body 18 shuts the communicating passage 22 and the fuel pressure in the base space 14 becomes equal to the high fuel pressure in the tip space 13, the valve body 11 is closed and the fuel injection is stopped. Thus, the control valve body 18 is opened or closed and the flowing out of the fuel in the base space 14 is controlled. Therefore, the valve body 11 for the injection hole is opened with the decrease of the fuel pressure in the base space 14 and is closed with the increase of the fuel pressure in the base space 14. Thus, the base space 14 functions as a control chamber.

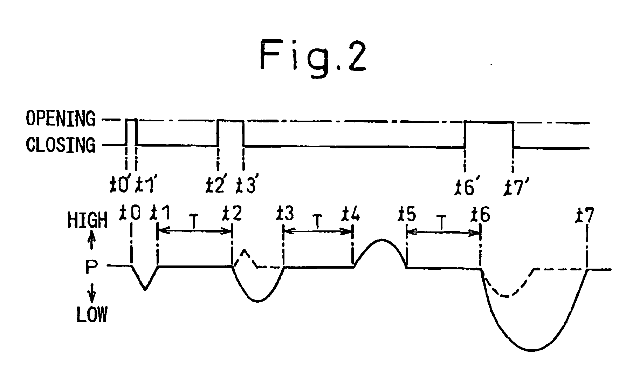

Fig. 2 is a time chart showing changes of opening or closing of the control valve body 18 and of the fuel pressure in the tip space 13 of the fuel injector. The fuel pressure (P) is an initial fuel pressure in the tip space 13 corresponding to the high fuel pressure in the pressurized fuel chamber 2. The control valve body 18 is opened by an opening order at the time (t0') and the fuel in the base space 14 starts to flow out to the low fuel pressure passage 20 via the control valve body chamber 19. Next, at the time (t1'), the control valve body 18 is closed by a close command and the flowing out of the fuel in the base space 14 is stopped.

Therefore, the fuel pressure in the base space 14 of the fuel injector decreases. Here, the control valve body 18 has been opened for a short period between the time (t0') and the time (tl'). Accordingly, the fuel pressure in the base space 14 does not decrease to lower than the above pressure (P'=(A2P-P2)/A1). Thus, the valve body 11 for the injection hole is not opened and the fuel is not injected. However, when the fuel pressure in the base space 14 drops, the high-pressure fuel is supplied to the base space 14 via the orifice 16 and thus the fuel pressure in the high fuel pressure passage 15 and the tip space 13 has decreased for a period between the time (t0) and the time (t1).

Therefore, a negative pressure wave is produced in the tip space 13 at the time (t1) and it propagates toward the pressurized fuel chamber 2. When the negative pressure wave reaches the pressurized fuel chamber 2, the chamber 2 as an open end reflects the negative pressure wave as a positive pressure wave and it propagates toward the fuel injector. when the positive pressure wave reaches the top space 13, the intensity thereof becomes slightly smaller due to damping but it makes the fuel pressure in the tip space 13 of the fuel injector increase at the time (t2) as shown by a dotted line.

In the present embodiment, the control valve body 18 is opened at the time (t2-) and is closed at the time <t3') such that, for the pilot fuel injection, the valve body 11 for the injection hole is opened at the time (t2) to start the fuel injection, and is closed at the time (t3) to finish the fuel injection, and thus a desired amount of fuel is injected. In this pilot fuel injection, the positive pressure wave makes the fuel pressure in the tip space 13 that actually influences the fuel injection increase, and thus the high fuel injection rate can be realized and the fuel can be dispersed widely in the whole of the combustion chamber. Accordingly, when the combustion starts with the main fuel injection after the pilot fuel injection, the fuel can ignite in the whole of the combustion chamber.

The fuel pressure in the tip space 13 actually drops according to the pilot fuel injection as shown by a solid line. Therefore, when the valve body 11 for the injection hole is closed at the time (t3) and the pilot fuel injection finishes, a negative pressure wave is produced in the tip space 13 and it propagates toward the pressurized fuel chamber 2. When the negative pressure wave reaches the pressurized fuel chamber 2, the chamber 2, as an open end, reflects the negative pressure wave as a positive pressure wave and it propagates toward the fuel injector. When the positive pressure wave reaches the tip space 3, the intensity thereof becomes slightly smaller due to damping but it makes the fuel pressure in the tip space 13 of the fuel injector increase between the time (t4) and the time(t5) as shown by a solid line.

As the tip space 13 is a closed end, the positive pressure wave propagates toward the pressurized fuel chamber 2 as it is. When the positive pressure wave reaches the pressurized fuel chamber 2, the chamber 2, as an open end, reflects the positive pressure wave as a negative pressure wave and it propagates toward the fuel injector. When the negative pressure wave reaches the top space 13, the intensity thereof becomes slightly smaller due to damping but it makes the fuel pressure in the tip space 13 of the fuel injector decrease at the time (t6) as shown by a dotted line.

In the present embodiment, the control valve body 18 is opened at the time (t6') and is closed at the time (t7') such that, for the main fuel injection, the valve body 11 for the injection hole is opened at the time (t6) to start the fuel injection, and is closed at the time (t7) to finish the fuel injection, and thus a desired amount of fuel is injected. in this main fuel injection, the negative pressure wave makes the fuel pressure in the tip space 13 that actually influences the fuel injection decrease, and thus the low fuel injection rate can be realized. Accordingly, it can be prevented that the large amount of fuel burns simultaneously with the start of the fuel injection and thus a large noise is not produced.

To carry out these fuel injections, the time (t2) at which the arrival positive pressure wave makes the fuel pressure in the tip space 13 of the fuel injector increase, and the time (t6) at which the arrival negative pressure wave makes the fuel pressure in the tip space 13 of the fuel injector decrease must be known. In fact, the time (t6) that is the starting time of the main fuel injection is decided on the basis of the piston position or the like. Accordingly, the time (t2), the time (t0), and the like are calculated on the basis of the time (t6).

The period between the time (t1) and the time (t2), the period between the time (t3) and the time (t4), and the period between the time (t5) and the time (t6) are a period (T) in which the pressure wave leaves and returns between the tip space 13 and the pressurized fuel chamber 2. The period (T) can be calculated on the basis of the pressure propagation speed (V) in the fuel. Namely, the distance between the tip space 13 of the fuel injector 1 and the pressurized fuel chamber 2 is (L1+L2) as shown in Fig. 1, and thus the period (T) can be calculated on the basis of 2(L1+L2)/V. The pressure propagation speed changes in accordance with the temperature, the pressure, and the properties of fuel, and thus it is preferable that the pressure propagation speed is decided on the basis of them.

The period between the time (t2) and the time (t3) is the pilot fuel injection period for which the valve body 11 for the injection hole has been opened. The period between the time (t4) at which the positive pressure wave produced by the negative pressure wave of the pilot fuel injection reaches the tip space 13, and the time (t5) at which the tip space 13 reflects the positive pressure wave is equal to the pilot fuel injection period. Thus, the time (t2) at which the pilot fuel injection starts can be calculated from the time (t6) at which the main fuel injection starts.

On the other hand, the time (t1) at which the negative pressure wave is produced in the tip space 13 to produce the positive pressure wave for making the fuel pressure in the tip space 13 increase in the pilot fuel injection is the period (T) in which the pressure wave leaves and returns between the tip space 13 and the pressurized fuel chamber 2 before the time (t2) at which the pilot fuel injection starts. To realize these fuel pressures in the tip portion, in fact, the opening and the closing of the control valve body 18 are controlled. Delay periods, such as the period from the time (t0-) at which the control valve body 18 is opened to the time (t0) at which the fuel pressure in the tip portion 13 actually starts to drop, the period from the time (t1') at which the control valve body 18 is closed to the time (t1) at which the negative pressure wave is actually produced in the tip portion 13, the period from the time (t2') at which the control valve body 18 is opened to the time (t2) at which the pilot fuel injection actually starts, the period from the time (t3') at which the control valve body 18 is closed to the time (t3) at which the pilot fuel injection actually finishes, the period from the time (t6') at which the control valve body 18 is opened to the time (t6) at which the main fuel injection actually starts, and the period from the time (t7') at which the control valve body 18 is closed to the time (t7) at which the main fuel injection actually finishes, are set on the basis of the fuel pressures in the tip portion 3 and in the pressurized fuel chamber 2.

In the present embodiment, the pressure decreasing period (t0-t1) which produces the negative pressure wave in the tip portion 13 without the fuel injection, the pilot fuel injection period (t2-t3), and the pressure increasing period (t4-t5) in the tip portion 13 due to the reflection wave of the negative pressure wave produced by the pilot fuel injection are very short in comparison with the period (T) in which the pressure wave leaves and returns between the tip space 13 and the pressurized fuel chamber 2. Accordingly, these periods may be ignored to simplify the control of the control valve body 18. Namely, the pilot fuel injection may start on the basis that the positive pressure wave reaches the fuel injector the period (T) after the time (t0) at which the fuel pressure in the tip portion initially drops, and the main fuel injection may start on the basis that the negative pressure wave reaches the fuel injector the two times of the period (T) after the time at which the pilot fuel injection starts.

In the present embodiment, the pilot fuel injection is carried out when the negative pressure wave that is produced to decrease the fuel pressure in the tip portion 13 without the fuel injection reaches the fuel injector as the positive pressure wave and thus the negative pressure wave produced without the fuel injection is utilized in the pilot fuel injection. On the other hand, the main fuel injection may be carried out when the negative pressure wave that is produced to decrease the fuel pressure in the tip portion 13 without the fuel injection reaches the fuel injector as the negative pressure wave and thus the negative pressure wave produced without the fuel injection may be utilized in the main fuel injection.

Also, when a large amount of fuel must be injected into the cylinder in high engine load operating conditions, an amount of fuel in the main fuel injection cannot be sufficiently decreased by one the pilot fuel injection. Thus, a relative large amount of fuel is injected in the main fuel injection and the fuel ignites and burns at one time with a large noise. Accordingly, it is suggested that an amount of fuel in the main fuel injection is sufficiently decreased with some pilot fuel injections.

For example, when two pilot fuel injections are carried out, these pilot fuel injections are preferably carried out at the high fuel injection rate. The first pilot fuel injection is carried out as shown in Fig. 2 and therefore the negative pressure wave produced by the first pilot fuel injection is reflected as the positive pressure wave. Thus, when this positive pressure wave increases the fuel pressure in the tip portion 13, i.e., at the time (t4), the second pilot fuel injection may be carried out. The negative pressure wave is produced in the tip portion 13 by the second pilot fuel injection. When the negative pressure wave leaves and returns two times between the fuel injector and the pressurized fuel chamber, the negative pressure wave reaches the tip portion 13 and the main fuel injection may be carried out at this time.

In the embodiment shown in Fig. 1, the pressure wave always leaves and returns between the fuel injector and the pressurized fuel chamber. Accordingly, the time at which the pilot fuel injection starts, on the basis of the time at which the main fuel injection starts, is necessarily decided in accordance with the period in which the pressure wave leaves and returns, i.e., the length of the pipe. Of course, the pressure wave may leave and return odd times between the time (t1) at which the negative pressure wave is produced without the fuel injection and the time (t2) at which the pilot fuel injection starts. As the result, the time (t1) and the time (t2) can be changed. However, the more the odd times that the pressure wave leaves and returns increase, the more the pressure wave is damped. Thus, this is a disadvantage in making the fuel injection rate in the pilot fuel injection increase. On the other hand, the pressure wave may leave and return even times between the time at which the pilot fuel injection starts and the time at which the main fuel injection starts. As the result, the time at which the pilot fuel injection starts and the time at which the main fuel injection starts can be changed. The more the even times that the pressure wave leaves and returns increase, the more the pressure wave is damped. Thus, this is a disadvantage in making the fuel injection rate in the main fuel injection decrease.

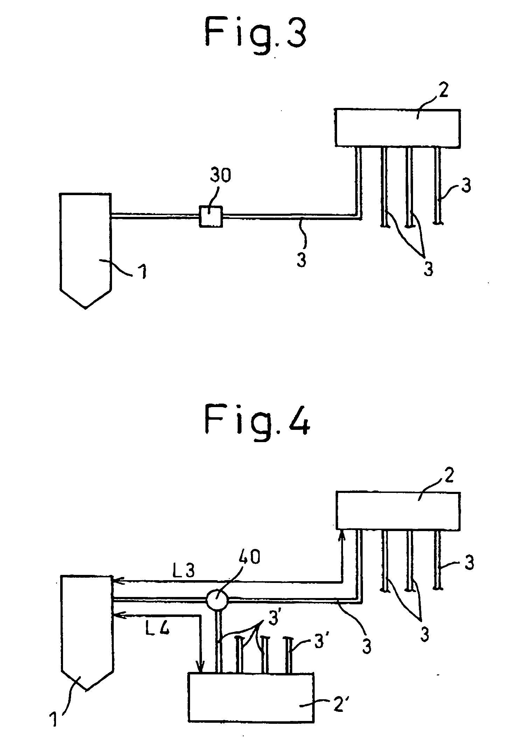

Fig. 3 shows another embodiment of a fuel injection control device. A difference between the above mentioned embodiment and the present embodiment is that a variable orifice device 30 is arranged in each pipe between each fuel injector 1 and the pressurized fuel chamber 2.

The variable orifice device 30 can make the inside diameter of the fuel passage therein very much larger or very much smaller than the inside diameter of the pipe 3. When the inside diameter of the fuel passage of the variable orifice device is made very much smaller than the inside diameter of the pipe 3, the variable orifice device 30, as a closed end, reflects the pressure wave propagating from the fuel injector 1 to the pressurized fuel chamber 2 as the same pressure wave. On the other hand, when the inside diameter of the fuel passage of the variable orifice device is made very much larger than the inside diameter of the pipe 3, the variable orifice device 30 as an open end reflects the pressure wave propagating from the fuel injector 1 to the pressurized fuel chamber 2 as the contrast pressure wave. Namely, the negative pressure wave can be reflected as the positive pressure wave and the positive pressure wave can be reflected as the negative pressure wave. The variable orifice device 30 also can make the inside diameter of the fuel passage therein equal to the inside diameter of the pipe 3. At this time, the pressure wave propagating from the fuel injector 1 to the pressurized fuel chamber 2 passes merely through the variable orifice device 30.

Thus, in the embodiment shown in Fig. 3, the variable orifice device 30 can reflect the pressure wave as the same pressure wave or the opposite pressure wave toward the fuel injector. Further, the variable orifice device 30 can make the pressure wave pass therethrough and the pressurized fuel chamber can reflect the passed pressure wave as the opposite pressure wave toward the fuel injector. Accordingly, the period from the time at which the negative pressure wave is initially produced without the fuel injection to the time at which the pilot fuel injection is carried out, the period between the pilot fuel injection and the main fuel injection, the period between the two pilot fuel injections, and the like, can be changed in accordance with the engine operating condition.

For example, when it is required that the period between the pilot fuel injection and the main fuel injection is made short, the variable orifice device 30, as an open end, may reflect the pressure wave, instead of the pressurized fuel chamber. Therefore, the pressure wave can return the fuel injector, in a short time, as a negative pressure wave. When it is required that this period is made shorter, the variable orifice device 30 as a close end may reflect the negative pressure wave produced by the pilot fuel injection as the negative pressure wave. When the negative pressure wave returns the fuel injector, the main fuel injection may be carried out. When two pilot fuel injections are carried out, the period between the two pilot fuel injections can be made short on the same basis.

Fig. 4 shows a further embodiment of a fuel injection control device. In the present embodiment, each fuel injector 1 is connected to a first pressurized fuel chamber 2 having a high target fuel pressure and a second pressurized fuel chamber 2' having a target fuel pressure smaller than the high target fuel pressure and thus each fuel injector 1 can inject fuel at two fuel pressures. The first pressurized fuel chamber 2 is connected to the fuel injector 1 via a first pipe 3 and the second pressurized fuel chamber 2' is connected to the fuel injector 1 via a second pipe 3'. Reference numeral 40 designates a changeover valve by which one of the pressurized fuel chambers 2, 2' is connected to the fuel injector 1.

In the present embodiment, the period from the time at which the negative pressure wave in the tip portion is produced without the fuel injection to the time at which the pilot fuel injection is carried out, the period between the pilot fuel injection and the main fuel injection, and the period between the two pilot fuel injections are not intended to change in accordance with the fuel injection pressure. The higher the fuel pressure is, the higher the pressure propagation speed of the pressure wave becomes. However, the pipe length (L3) from the first pressurized fuel chamber 2 to the fuel injector 1 via the changeover valve 40 is made long and the pipe length (L4) from the second pressurized fuel chamber 2' to the fuel injector 1 via the changeover valve 40 is made short. Accordingly, when the fuel is injected at either fuel pressure, the pressure wave leaves and returns between the fuel injector and the corresponding pressurized fuel chamber in the same period.

A fuel injection control device is disclosed. The fuel injection control device comprises a pressurized fuel chamber and a fuel injector connected with the pressurized fuel chamber via a pipe. When the fuel injector carries out a pilot fuel injection and a main fuel injection, a part of the fuel is consumed from the fuel injector without the fuel injection to produce a negative pressure wave in the fuel injector such that a positive pressure wave reaches the fuel injector in the pilot fuel injection or a negative pressure wave reaches the fuel injector in the main fuel injection.

## Claims

1. A fuel injection control device comprising
a pressurized fuel chamber (2) and a fuel injector (1) connected with said pressurized fuel chamber (2) via a pipe (3),
**characterized in that**
said fuel injector (1) carries out a pilot fuel injection and a main fuel injection, wherein a part of the fuel is consumable from said fuel injector (1) without a fuel injection to produce a negative pressure wave in said fuel injector (1) such that a negative pressure wave reaches said fuel injector (1) during said main fuel injection.

2. A fuel injection control device according to claim 1, which is adapted to carry out
said pilot fuel injection in a case in which said negative pressure wave produced to consume said part of the fuel in said fuel injector (1) leaves and returns once or odd times as the pressure wave between said fuel injector (1) and said pressurized fuel chamber (2), and reaches said fuel injector (1) as a positive pressure wave, and
said main fuel injection in a case in which a negative pressure wave produced by said pilot fuel injection leaves and returns twice or even times as the pressure wave between said fuel injector (1) and said pressurized fuel chamber (2), and reaches said fuel injector (1) as a negative pressure wave.

3. A fuel injection control device according to claim 1, which is adapted between said fuel injector (1) and said pressurized fuel chamber (2) to provide a variable orifice device (30) that can reflect said pressure wave propagating from said fuel injector (1) to said pressurized fuel chamber (2) as a negative pressure wave or a positive pressure wave, and that can make said pressure wave pass therethrough, wherein
said pilot fuel injection is carried out in a case in which said negative pressure wave produced to consume said part of the fuel in said fuel injector (1) is reflected by said variable orifice device (30) as said positive pressure wave, and said positive pressure wave reaches said fuel injector (1), and
said main fuel injection is carried out in a case in which a negative pressure wave produced by said pilot fuel injection is finally reflected by said variable orifice device (30) or by said pressurized fuel chamber (2) as said negative pressure wave, and said negative pressure wave reaches said fuel injector (1).

4. A fuel injection control device according to claim 2 wherein
the first pressurized fuel chamber (2) having a high target fuel pressure and the second pressurized fuel chamber (2') having a target fuel pressure smaller than said high target fuel pressure are provided, said pipe (3) has changeover means to connect said fuel injector (1) to either said first pressurized fuel chamber (2) or said second pressurized fuel chamber (2'),
a path length between said fuel injector (1) and said first pressurized fuel chamber (2) via said pipe (3) is made longer than that between said fuel injector (1) and said second pressurized fuel chamber (2') via said pipe (3),
a period in which said pressure wave leaves and returns one time between said fuel injector (1) and said first pressurized fuel chamber (2), in a case in which said fuel injector (1) is connected to said first pressurized fuel chamber (2) by said changeover means (40), is made equal to a period in which said pressure wave leaves and returns one time between said fuel injector (1) and said second pressurized fuel chamber (2'), in a case in which said fuel injector (1) is connected to said second pressurized fuel chamber (2') by said changeover means (40),
if said pilot fuel injection and said main fuel injection are carried out by using of either said first pressurized fuel chamber (2) or said second pressurized fuel chamber (2'), the period between said pilot fuel injection and said main fuel injection is constant.

## Patentansprüche

1. Kraftstoffeinspritzsteuerungsvorrichtung mit
einer Kammer (2) für druckbeaufschlagten Kraftstoff und einem Kraftstoffinjektor (1), der mit der Kammer (2) für druckbeaufschlagten Kraftstoff über ein Rohr (3) verbunden ist,
**dadurch gekennzeichnet, dass**
der Kraftstoffinjektor (1) eine Kraftstoffpiloteinspritzung und eine Kraftstoffhaupteinspritzung ausführt, wobei ein Teil des Kraftstoffs durch den Kraftstoffinjektor (1) ohne eine Kraftstoffeinspritzung dazu verbrauchbar ist, um in dem Kraftstoffinjektor (1) eine Unterdruckwelle zu erzeugen, so dass eine Unterdruckwelle den Kraftstoffinjektor (1) während der Kraftstoffhaupteinspritzung erreicht.

2. Kraftstoffeinspritzsteuerungsvorrichtung nach Anspruch 1, die angepasst ist, um Folgendes auszuführen:
die Kraftstoffpiloteinspritzung in einem Fall, in dem die Unterdruckwelle, die dazu erzeugt ist, um den Teil des Kraftstoffs in dem Kraftstoffinjektor (1) zu verbrauchen, einmal oder eine ungerade Anzahl von Male als die Druckwelle zwischen dem Kraftstoffinjektor (1) und der Kammer (2) für druckbeaufschlagten Kraftstoff abgeht und zurückkehrt und den Kraftstoffinjektor (1) als eine Überdruckwelle erreicht, und
die Kraftstoffhaupteinspritzung in einem Fall, in dem eine Unterdruckwelle, die durch die Kraftstoffpiloteinspritzung erzeugt ist, zweimal oder eine gerade Anzahl von Male als die Druckwelle zwischen dem Kraftstoffinjektor (1) und der Kammer (2) für druckbeaufschlagten Kraftstoff abgeht und zurückkehrt und den Kraftstoffinjektor (1) als eine Unterdruckwelle erreicht.

3. Kraftstoffeinspritzsteuerungsvorrichtung nach Anspruch 1, die zwischen dem Kraftstoffinjektor (1) und der Kammer (2) für druckbeaufschlagten Kraftstoff angepasst ist, um eine variable Düsenvorrichtung (30) bereitzustellen, die die sich von dem Kraftstoffinjektor (1) zu der Kammer (2) für druckbeaufschlagten Kraftstoff als eine Unterdruckwelle oder eine Überdruckwelle fortpflanzende Druckwelle reflektieren kann, und die die Druckwelle dazu bringen kann, dort hindurch zu treten, wobei
die Kraftstoffpiloteinspritzung in einem Fall ausgeführt wird, in dem die Unterdruckwelle, die erzeugt wird, um den Teil des Kraftstoffs in dem Kraftstoffinjektor (1) zu verbrauchen, durch die variable Düsenvorrichtung (30) als die Überdruckwelle reflektiert wird und die Überdruckwelle den Kraftstoffinjektor (1) erreicht, und
die Kraftstoffhaupteinspritzung in einem Fall ausgeführt wird, in dem eine Unterdruckwelle, die durch die Kraftstoffpiloteinspritzung erzeugt wird, schließlich durch die variable Düsenvorrichtung (30) oder durch die Kammer (2) für druckbeaufschlagten Kraftstoff als die Unterdruckwelle reflektiert wird, und wobei die Unterdruckwelle den Kraftstoffinjektor (1) erreicht.

4. Kraftstoffeinspritzsteuerungsvorrichtung nach Anspruch 2, wobei
die erste Kammer (2) für druckbeaufschlagten Kraftstoff, die einen hohen Kraftstoffsolldruck hat, und die zweite Kammer (2') für druckbeaufschlagten Kraftstoff, die einen Kraftstoffsolldruck hat, der niedriger als der hohe Kraftstoffsolldruck ist, vorgesehen sind, wobei das Rohr (3) eine Umschalteinrichtung hat, um den Kraftstoffinjektor (1) mit entweder der ersten Kammer (2) für druckbeaufschlagten Kraftstoff oder der zweiten Kammer (2') für druckbeaufschlagten Kraftstoff zu verbinden,
eine Pfadlänge zwischen dem Kraftstoffinjektor (1) und der ersten Kammer (2) für druckbeaufschlagten Kraftstoff über das Rohr (3) länger als die Pfadlänge zwischen dem Kraftstoffinjektor (1) und der zweiten Kammer (2') für druckbeaufschlagten Kraftstoff über das Rohr (3) gemacht ist,
eine Zeitdauer, in der die Druckwelle einmal zwischen dem Kraftstoffinjektor (1) und der ersten Kammer (2) für druckbeaufschlagten Kraftstoff in einem Fall abgeht und zurückkehrt, in dem der Kraftstoffinjektor (1) durch die Umschalteinrichtung (40) mit der ersten Kammer (2) für druckbeaufschlagten Kraftstoff verbunden ist, gleich zu einer Zeitdauer gemacht ist, in der die Druckwelle einmal zwischen dem Kraftstoffinjektor (1) und der zweiten Kammer (2') für druckbeaufschlagten Kraftstoff in einem Fall abgeht und zurückkehrt, in dem der Kraftstoffinjektor (1) durch die Umschalteinrichtung (40) mit der zweiten Kammer (2') für druckbeaufschlagten Kraftstoff verbunden ist,
wobei die Zeitdauer zwischen der Kraftstoffpiloteinspritzung und der Kraftstoffhaupteinspritzung konstant ist, wenn die Kraftstoffpiloteinspritzung und die Kraftstoffhaupteinspritzung unter Verwendung von entweder der ersten Kammer (2) für druckbeaufschlagten Kraftstoff oder der zweiten Kammer (2') für druckbeaufschlagten Kraftstoff ausgeführt werden.

## Revendications

1. Dispositif de commande d'injection de carburant comprenant
une chambre de carburant sous pression (2) et un injecteur de carburant (1) raccordé à ladite chambre de carburant sous pression (2) par l'intermédiaire d'un tuyau (3),
**caractérisé en ce que**
ledit injecteur de carburant (1) exécute une injection de carburant pilote et une injection de carburant principale, où une partie du carburant peut être consommée à partir dudit injecteur de carburant (1) sans injection de carburant pour produire une onde de pression négative dans ledit injecteur de carburant (1) de sorte qu'une onde de pression négative arrive audit injecteur de carburant (1) pendant ladite injection de carburant principale.

2. Dispositif de commande d'injection de carburant selon la revendication 1, qui est adapté pour exécuter
ladite injection de carburant pilote dans un cas dans lequel ladite onde de pression négative produite pour consommer ladite partie du carburant dans ledit injecteur de carburant (1) quitte et retourne une fois ou un nombre impair de fois comme l'onde de pression entre ledit injecteur de carburant (1) et ladite chambre de carburant sous pression (2), et arrive audit injecteur de carburant (1) comme une onde de pression positive, et
ladite injection de carburant principale dans un cas dans lequel une onde de pression négative produite par ladite injection de carburant pilote quitte et retourne deux fois ou un nombre pair de fois comme l'onde de pression entre ledit injecteur de carburant (1) et ladite chambre de carburant sous pression (2), et arrive audit injecteur de carburant (1) comme une onde de pression négative.

3. Dispositif de commande d'injection de carburant selon la revendication 1, qui est adapté entre ledit injecteur de carburant (1) et ladite chambre de carburant sous pression (2) pour pourvoir un dispositif à orifice variable (30) qui peut refléter ladite onde de pression se propageant dudit injecteur de carburant (1) à ladite chambre de carburant sous pression (2) comme une onde de pression négative ou comme une onde de pression positive, et qui peut faire passer ladite onde de pression entre eux, dans lequel
ladite injection de carburant pilote est exécutée dans un cas dans lequel ladite onde de pression négative produite pour consommer ladite partie du carburant dans ledit injecteur de carburant (1) est reflétée par ledit dispositif à orifice variable (30) comme ladite onde de pression positive, et ladite onde de pression positive atteint ledit injecteur de carburant (1), et
ladite injection de carburant principale est exécutée dans un cas dans lequel une onde de pression négative produite par ladite injection de carburant pilote est finalement reflétée par ledit dispositif à orifice variable (30) ou par ladite chambre de carburant sous pression (2) comme ladite onde de pression négative, et ladite onde de pression négative atteint ledit injecteur de carburant (1).

4. Dispositif de commande d'injection de carburant selon la revendication 2 dans lequel
la première chambre de carburant sous pression (2) ayant une pression de carburant cible élevée et la deuxième chambre de carburant sous pression (2') ayant une pression de carburant cible inférieure à ladite pression de carburant cible élevée sont pourvues, ledit tuyau (3) a un moyen de changement pour raccorder ledit injecteur de carburant (1) soit à ladite première chambre de carburant sous pression (2) ou à ladite deuxième chambre de carburant sous pression (2'),
une longueur de voie entre ledit injecteur de carburant (1) et ladite première chambre de carburant sous pression (2) par l'intermédiaire dudit tuyau (3) est faite plus longue qu'entre ledit injecteur de carburant (1) et ladite deuxième chambre de carburant sous pression (2') par l'intermédiaire dudit tuyau (3),
une période dans laquelle ladite onde de pression quitte et retourne une fois entre ledit injecteur de carburant (1) et ladite première chambre de carburant sous pression (2), dans un cas dans lequel ledit injecteur de carburant (1) est raccordé à ladite première chambre de carburant sous pression (2) par ledit moyen de changement (40), est établie égale à une période dans laquelle ladite onde de pression quitte et retourne une fois entre ledit injecteur de carburant (1) et ladite deuxième chambre de carburant sous pression (2'), dans un cas dans lequel ledit injecteur de carburant (1) est raccordé à ladite deuxième chambre de carburant sous pression (2') par ledit moyen de changement (40),
si ladite injection de carburant pilote et ladite injection de carburant principale sont exécutées en utilisant soit ladite première chambre de carburant sous pression (2) ou ladite deuxième chambre de carburant sous pression (2'), la période entre ladite injection de carburant pilote et ladite injection de carburant principale est constante.
